# EUROPÄISCHE PATENTANMELDUNG

(11) **EP 0 940 194 A1**
(43) Veröffentlichungstag der Anmeldung: **08.09.1999**
(21) Anmeldenummer: 99104159.1
(22) Anmeldetag: 02.03.1999
(51) Int. Cl.: B21B 39/12, B65G 54/02

(54) **Förderstrecke zum Befördern von Bandmaterial aus Metall**

(30) Priorität: 05.03.1998 DE 19809447
(71) Anmelder: SMS SCHLOEMANN-SIEMAG AKTIENGESELLSCHAFT, 40237 Düsseldorf (DE)
(72) Erfinder: Waase, Dieter, 41564 Kaarst (DE)
(74) Vertreter: Valentin, Ekkehard, Dipl.-Ing.

(57) **Zusammenfassung**

Um eine Förderstrecke für Bandmaterial, insbesondere eine Kühlstrecke, bestehend aus in Förderrichtung hintereinander angeordneten Rollen, deren Längsachsen quer zur Förderrichtung verlaufen, zu schaffen, über die auch Metallband geringer Dicke ohne zu flattern oder auszubrechen befördert werden kann, wird vorgeschlagen, daß in Zwischenräumen (2) der Rollen (4) der erste Teil eines Linearmotors angeordnet ist, der aus in Förderrichtung hintereinander angeordneten Elementen (3) besteht, wobei das zu befördernde Metallband der zweite Teil des Linearmotors ist.

## Beschreibung

Die Erfindung betrifft eine Förderstrecke zum Befördern von Bandmaterial aus Metall, insbesondere aus Stahl.

Bei der Herstellung von Metallband wird das Band über eine Vielzahl von Förderstrecken geleitet, beispielsweise zum Beizen oder Kühlen vor dem Einlaufen in den Haspel. Bei den herkömmlichen Kühlstrecken handelt es sich üblicherweise um Rollgänge aus hintereinander angeordneten selbständig angetriebenen Rollen. Die Kühlung der Walzprodukte geschieht über Abkühlen an Luft oder Kühlmittel, meist Wasser. Bei einer Laminar-Kühlstrecke wird Wasser durch Rohrleitungen auf das Band geleitet.

Neben den selbständig angetriebenen Rollen sind Vorschubsysteme für Bandmaterial, insbesondere zum Einsatz in Beizlinien, bekannt, die Linearmotoren für dessen Beförderung ausnutzen. In der europäischen Patentanmeldung 0 387 555 wird vorgeschlagen, das Band mittels eines Schleppwagens zu befördern, der selbst mittels eines Linearmotors angetrieben wird. Hierbei wird der Bandanfang in einer Kammer des Schleppwagens gehalten und durch je einen randseitig des Schleppwagens angeordneten, reversierbaren Linearmotor zu dessen Atrieb über eine Förderstrecke an einer Schienenführung gefördert. Die stromdurchflossenen aktiven Motorteile der Linearmotore sind in der Schienenführung integriert, wogegen die aus Dauermagneten bestehenden Reaktionsteile der Linearmotore im Schleppwagen angeordnet sind.

Bei dem oben beschriebenen Fördervorgang mit selbständig angetriebenen Rollen liegt das Band wegen seines Eigengewichtes auf dem Rollgang auf. Wegen der Anpassung des Bandes an das Endprodukt besteht aber die Tendenz, die Dicke des Metallbandes immer weiter zu reduzieren. So sind Walzanlagen geschaffen worden, die Metallbänder von einer Banddicke von bisher üblichen 1,5 mm von nunmehr 0,7 mm produzieren. Wird ein solches dünnes Band über die bekannten Förderstrecken befördert, liegt das Band wegen des reduzierten Eigengewichts nicht mehr ruhig auf dem Rollgang auf. Es kommt zu nachteiligem Flattern und Ausbrechen des Bandes.

Demnach liegt der vorliegenden Erfindung die Aufgabe zugrunde, eine Förderstrecke für Bandmaterial, insbesondere eine Kühlstrecke, zu schaffen, über die auch Metallband mit geringen Dicken ruhig befördert werden kann.

Die Aufgabe wird durch die Merkmale der Vorrichtung nach Anspruch 1 gelöst. Vorteilhafte Ausgestaltungen der Erfindung sind in den Unteransprüchen offenbart.

Es wird eine Förderstrecke vorgeschlagen, die aus in Förderrichtung hintereinander angeordneten Rollen besteht, deren Längsachsen guer zur Förderrichtung verlaufen. Hierbei ist in Räumen zwischen den Rollen der erste Teil eines Linearmotors angeordnet, der aus in Förderrichtung hintereinander angeordneten Elementen besteht, wobei das zu befördernde Metallband der zweite Teil des Linearmotors ist.

Bei einer vorteilhaften Ausführungsform sind die Rollen in mindestens zwei Rollgängen angeordnet. In den Bereichen zwischen den Rollgängen ist dann entlang der Förderrichtung der erste Teil eines Linearmotors angeordnet. Bevorzugt sind zwei in Förderrichtung parallel verlaufende Rollgänge vorgesehen.

Der erste Teil des Linearmotors setzt sich aus einzelnen Elementen zusammen, die jeweils aus einer stromdurchflossenen Spule und einem von dieser aufgenommenen Element aus ferromagnetischen Werkstoff bestehen.

Bei der vorgeschlagenen Anordnung treten hohe Anziehungskräfte zwischen den beiden Teilen des Linearmotors auf, die ein Vielfaches der Vorschubkraft betragen können. Die Förderung des Bandes wird daher vorzugsweise über selbständig angetriebene Rollen gewährleistet, während gleichzeitig durch das in jedem einzelnen Element des ersten Teils des Linearmotors aufgebaute Magnetfeld eine Anziehungskraft auf das Band aufgebracht wird. Durch diesen Anziehungseffekt wird einem Flattern oder Ausbrechen des dünnen Bandes entgegengewirkt.

Selbst heißes Stahlband, das noch nicht unter die Curie-Temperatur abgekühlt ist, erfahrt diesen Anzieheffekt. Durch das erzeugte Magnetfeld werden die Ladungen des bewegten Metallbandes verschoben. Es entstehen Wirbelströme im Metallband, die innerhalb des bewegten Körpers geschlossen sind und im Zusammenhang mit den einzelnen Magnetfeldern in einer Anziehwirkung resultieren.

Vorteilhafterweise ist der ferromagnetische Werkstoff Eisen, in Form eines Eisenkerns oder Eisenjochs. Bei der Ausführungsform des Eisenjochs ist dieses in seinem Stegbereich von der Spule umgeben, während seine Enden in Richtung des zu fördernden Bandes zeigen, ohne in Kontakt mit dem Band zu kommen. Bei Bewegung des Metallbandes wird das durch die stromdurchflossene Spule induzierte Magnetfeld geschlossen, was eine Anziehwirkung auf das Band gegen die Enden des Eisenjoches und somit einen "Anzieheffekt" an die Rollgänge bewirkt.

Vorteilhafterweise werden die einzelnen Spulen mit einem Strom von einer Frequenz im Bereich zwischen 50 und 60 Hz gespeist, wobei der Frequenzbereich gegebenenfalls in Anpassung an die Umstände erhöht oder erniedrigt werden kann.

Bevorzugt kann die vorgeschlagene Förderstrecke auch als Kühlstrecke dienen, indem das beförderte Bandmaterial gleichzeitig laminar mit Kühlmittel beaufschlagt wird.

Die Förderstrecke ist insbesondere vorgesehen bei Bändern mit einer Dicke unter 1 mm. Bei Umstellung des Walzprogramms und dementsprechender Förderung dickerer Bänder kann die Förderstrecke leicht durch Abschalten der Stromdurchfuhr und damit des Linearmotors angepaßt werden.

Es wird allerdings vorgeschlagen, den Bereich zwischen dem letzten Gerüst und dem Haspel stets mit der vorgeschlagenen Anordnung zu versehen, um bei allen Banddicken ein nachteiliges Flattern beim Einlauf in den Haspel zu verhindern.

Weitere Einzelheiten und Vorteile der Erfindung ergeben sich aus den Ansprüchen und der nachfolgenden Beschreibung, in der die in den Figuren dargestellten Ausführungsbeispiele der Erfindung näher erläutert werden. Hierbei zeigen:
- Figur 1 eine: schematische Ansicht einer ersten Ausführungsform der Erfindung mit einem Rollgang;
- Figur 2 eine: schematische Ansicht einer zweiten Ausführungsform der Erfindung mit einem Rollgang;
- Figur 3 eine: schematische Ansicht einer Ausführungsform der Erfindung mit zwei parallelen Rollgängen.

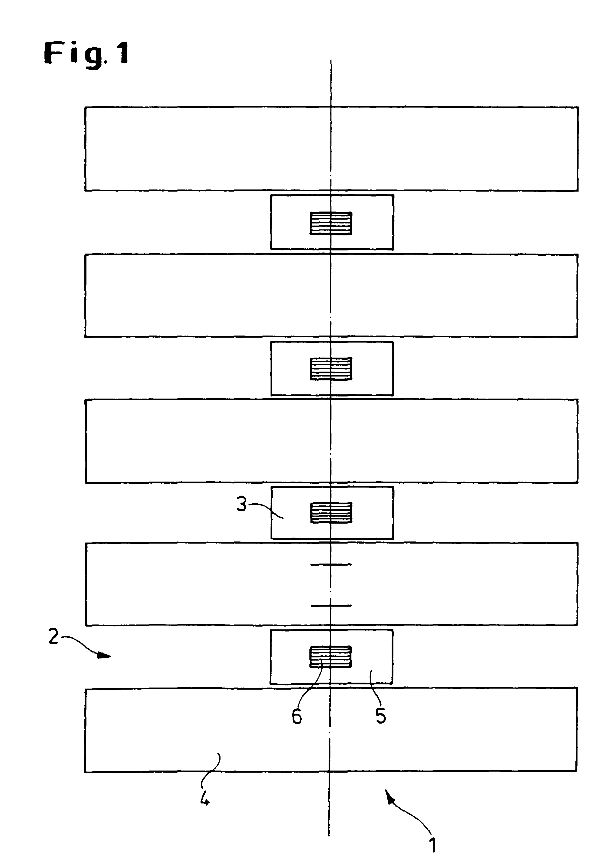

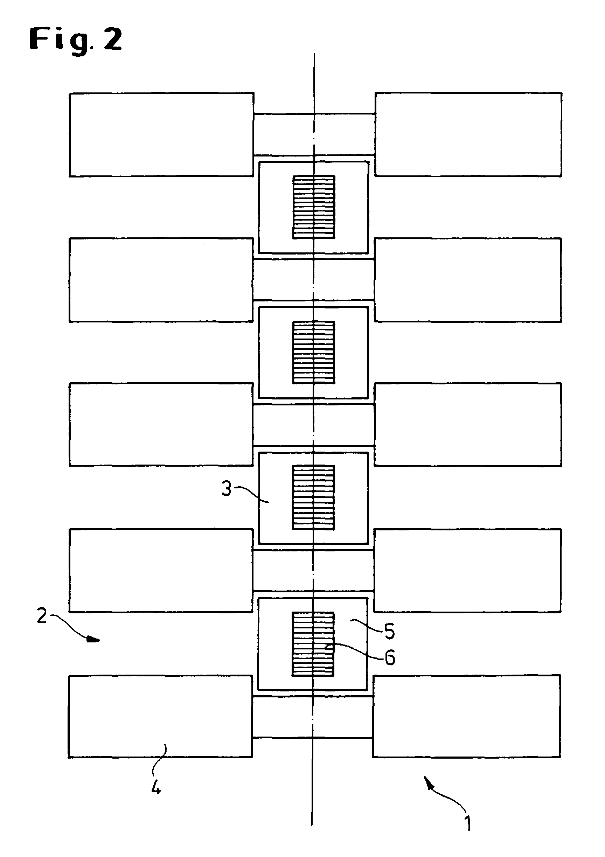

Figur 1 und 2 zeigen eine Förderstrecke, die jeweils aus einem Rollgang 1 mit zwischen den einzelnen Rollen 4 angeordneten Linearmotorelementen besteht. In den Zwischenräumen 2 der einzelnen Rollen 4, die selbständig angetrieben werden, ist der erste Teil 3 des Linearmotors vorgesehen. Dieser besteht aus einzelnen Elementen, die sich jeweils aus einer Spule 5 mit einem mittigen Eisenkern 6 zusammensetzen. Bei Beaufschlagung der Spulen mit Strom bewirkt das erzeugte Magnetfeld eine Anziehungs- und Vorschubkraft auf das über die Rollgänge 1 transportierte Metallband (nicht gezeigt), das den zweiten Teil des Linearmotors bildet. Die erzeugte Anziehungskraft wird ausgenutzt, um dünnes Metallband daran zu hindern zu flattern oder auszubrechen. Es wird ein ruhiger Verlauf des Bandes gewährleistet.

Die Rollen 4 der ersten Ausführungsform in Figur 1 sind zylindrisch geformt, wobei die einzelnen Linearmotorelemente in den Zwischenräumen 2 längs der Förderrichtung hintereinander angeordnet sind.

Um eine besseren Wirkungsgrad zu erhalten, wird in einer zweiten Ausführungsform vorgeschlagen, die Durchmesser der Rollen in einem Teilbereich so zu verringern, daß diese die Elemente des ersten Teils des Linearmotors teilweise umlaufen (Figur 2).

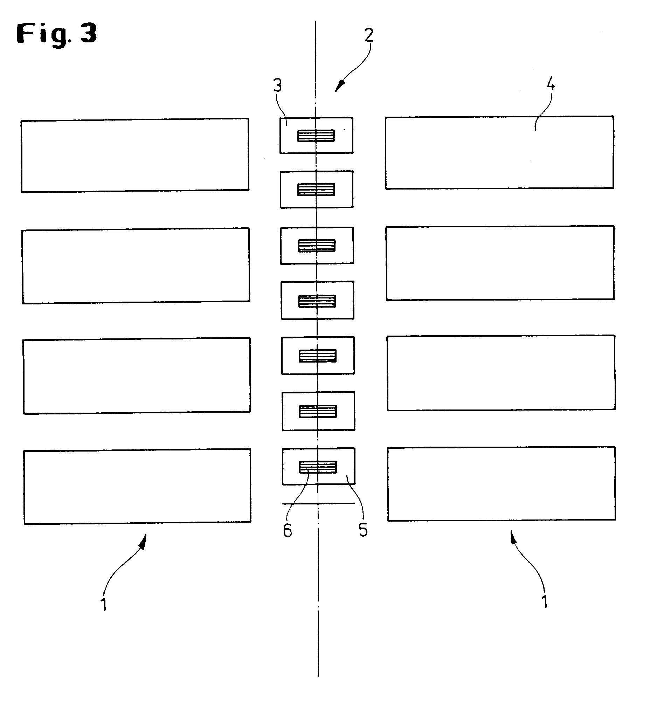

In Figur 3 ist schematisch eine Ausführungsform mit zwei Rollgängen 1 mit in ihrem Zwischengang 2 angeordneten Linearmotorelementen des ersten Teils 3 dargestellt. Die einzelnen Rollen 4 der Rollgange 1 sind quer zur Durchlaufrichtung des Metallbandes (nicht gezeigt) angeordnet und können über Motoren (nicht gezeigt) selbständig angetrieben werden. In dem Zwischenraum 2 der beiden Rollgänge 1 ist der erste Teil 3 des Linearmotors vorgesehen, der aus einzelnen Elementen besteht.

## Patentansprüche

1. Förderstrecke zum Befördern von Bandmaterial aus Metall, insbesondere aus Stahl, bestehend aus in Förderrichtung hintereinander angeordneten Rollen, deren Längsachsen quer zur Förderrichtung verlaufen
**dadurch gekennzeichnet,**
daß in Zwischenräumen (2) der Rollen (4) der erste Teil eines Linearmotors angeordnet ist, der aus in Förderrichtung hintereinander angeordneten Elementen (3) besteht, wobei das zu befördernde Metallband der zweite Teil des Linearmotors ist.

2. Förderstrecke nach Anspruch 1,
**dadurch gekennzeichnet,**
daß die Rollen (4) in mindestens zwei Rollgängen (1) angeordnet sind und daß zwischen den Rollgängen (1) entlang der Förderrichtung die Elemente (3) des ersten Teils des Linearmotors angeordnet sind.

3. Förderstrecke nach Anspruch 1 oder 2,
**dadurch gekennzeichnet,**
daß die Elemente (3) des ersten Teils des Linearmotors sich jeweils aus einer Spule (5) und einem von dieser aufgenommenen Element aus ferromagnetischen Werkstoff (6) zusammensetzen.

4. Förderstrecke nach Anspruch 3
**dadurch gekennzeichnet,**
daß der ferromagnetische Werkstoff Eisen ist in Form eines Eisenjoches.

5. Förderstrecke nach den Ansprüchen 1 bis 4,
**dadurch gekennzeichnet,**
daß die Spulen (5) mit einer Stromfrequenz in einem Bereich von 50 bis 60 Hz gespeist werden.

6. Förderstrecke nach einem der vorstehenden Ansprüche,
**dadurch gekennzeichnet,**
daß die Förderstrecke bei Bandbehandlungsanlagen eingesetzt wird, insbesondere als Laminar-Kühlstrecke.

7. Förderstrecke nach einem der vorstehenden Ansprüche,
**dadurch gekennzeichnet,**
daß die Rollen einzeln oder zusammen über einen Motor angetrieben werden.
